# EUROPEAN PATENT APPLICATION

(11) **EP 2 557 866 A1**
(43) Date of publication of application: **13.02.2013**
(21) Application number: 11360033.2
(22) Date of filing: 08.08.2011
(51) Int. Cl.: H04W 52/28

(54) **Transmit power control**

(71) Applicant: Alcatel Lucent, 75007 Paris (FR)
(72) Inventor: Khan, Mohammad Ather, Swindon Wiltshire, SN5 5AG (GB); Verdier, Denis, 78000 Versailles Ile de France (FR); Vallette, Laurent, 92290 Chatenay Malabry (FR); Jugl, Enrico, 90409 Nuremberg Bavaria (DE)
(74) Representative: Script IP Limited

(57) **Abstract**

A method of controlling network node radio link transmit power in a wireless telecommunications network, a network node and computer program product operable to carry out that method. The radio link is operable to support data traffic communication within said network on a data channel of that radio link. The method comprises: monitoring said data traffic on said channel of said radio link for a period of inactivity; and if inactivity is detected,
setting a power control parameter, in accordance with which said network node radio link transmit power is set, to a default minimum value;
communicating said parameter to said network node;
monitoring whether said default minimum power control parameter is being achieved and requesting a predetermined change to said parameter if not.
Such a method allows for a potential increase in air interface capacity gain by providing data activity aware power control. Such a method may be particularly beneficial to manage power control of bursty or discontinuous data traffic

## Description

### FIELD OF THE INVENTION

The present invention relates to a method of controlling network node transmit power, a network node operable to carry out that method, and a computer program product operable to carry out that method.

### BACKGROUND

Wireless telecommunications systems are known. In a cellular system, radio coverage is provided to user equipment, for example, mobile telephones, in areas known as cells. A base station is located in each cell to provide radio coverage. User equipment in each cell receives information and data from the base station and transmits information and data to the base station.

Information and data transmitted by the base station to the user equipment occurs on channels of radio carriers known as downlink carriers. Information and data transmitted by user equipment to the base station occurs on uplink data channels of radio carriers known as uplink carriers.

The widespread popularity of smartphones has caused a change to data traffic profiles in known telecommunications networks. The data traffic profile of user equipment is becoming increasingly discontinuous or "bursty" and traditional power control algorithms, designed primarily for continuous data transmission, may not aid overall network operation when presented with such a change to a typical data traffic profile.

Accordingly, it is desired to provide an improved technique for controlling power in a wireless communication network.

### SUMMARY

A first aspect provides a method of controlling network node radio link transmit power in a wireless telecommunications network, said radio link being operable to support data traffic communication within said network on a data channel of said radio link, said method comprising: monitoring the data traffic on the data channel of the radio link for a period of inactivity; and if inactivity is detected, setting a power control parameter, in accordance with which the network node radio link transmit power is set, to a default minimum value; and communicating the parameter to the network node. The overall operation of a wireless telecommunications system will typically be overseen by a core network. That core network comprises a series of radio network controllers which operate to control the system by communicating with base stations over a backhaul communications link and communicating indirectly with user equipment via radio links with those base stations. Base stations are thus operable to cooperate with an RNC and user equipment in order to efficiently manage overall operation of a wireless telecommunications system.

In general, operational characteristics of a radio carrier forming a link between user equipment and a base station is controlled by user equipment controller logic, based upon information and signals received from a base station. Typically, a pilot channel of a radio carrier acts as a dedicated physical control channel and that channel is necessary to maintain contact between user equipment and a base station. The power allocated to a pilot channel of a radio carrier is determined by user equipment controller logic based upon information received from a base station via the radio link. The power control process between user equipment and a base station sets the level of overall user equipment power allocated to a pilot channel of a radio carrier and is known as "inner loop" power control. Inner loop power control operates to pre-allocate power from a user equipment power source to transmissions occurring on a radio carrier.

Outer loop power control operates at an RNC and acts to set a target signal to noise and interference ratio for communications links. The inner loop power control tries to maintain a target signal to noise and interference ratio set by outer loop power control processes. Outer loop power control is achieved between user equipment and a base station or RNC by monitoring the quality of data traffic received at a base station from user equipment.

In general, dependent upon the type of data carried by a data carrier on a radio link, an RNC or base station will operate to try and maintain a particular quality of service for an end user. A target signal to noise and interference ratio is set by a base station or RNC in accordance with a target quality of service to be maintained in respect of the particular data type being carried across the radio link. If quality of service is not being maintained, the end user will typically be subject to a disturbed service. In such a scenario, outer loop power control operates to increase a target signal to noise and interference ratio to be maintained by inner loop power control processes between user equipment and a base station, and that target is fed back to a base station from an RNC. Typically the transmit power at user equipment will then be increased to try to meet the target set to maintain end user quality of service (QoS).

The widespread popularity of smartphones in commercial networks has led to a change in the typical data traffic profiles carried on data carriers. The loading of web pages, then subsequent reading, for example, by an end user has led to a data traffic profile which has become substantially discontinuous or bursty in nature. Traditional power control algorithms are designed primarily for continuous data transmission and do not offer a particularly efficient regime for power control in such bursty scenarios, thereby leading to network resource overuse and the drainage of user equipment power sources unnecessarily.

In particular, in a UMTS radio network, for example, utilisation of power control algorithms designed for continuous data transmission may result in a waste of available resource when a channel carrying data is inactive whilst the signal to interference ratio target is set particularly high due to the last carried data traffic transmissions.

The first aspect recognises that outer loop power control mechanisms may be adapted to be made aware of data channel inactivity. That is to say, by making an outer loop power control mechanism aware of data traffic inactivity, steps can be taken to manage power control more effectively and efficiently, leading to overall network capacity gain.

According to embodiments, outer loop power control mechanisms can be adapted to be made aware of channel data inactivity whilst also performing a normal outer loop power control mechanism, thus performing normally whilst there is data traffic being handled across a radio link but implementing a modified regime when data traffic inactivity is detected.

The first aspect recognises that by setting a power control parameter to a default minimum value on the occurrence of detection of inactivity on a data traffic channel, a significant reduction in user equipment transmit power can result, thus resulting in reduced interference to other network users together with user equipment power savings. Potential net gains in cell capacity become significant as the number of users increases in a cell. Each of those users also using smartphones or legacy user equipment are more likely to be able to operate successfully with minimal or practically no impact to each individual user end experience since, whilst inactive, each user equipment operates at a reduced transmit power.

In accordance with the first aspect, it will be appreciated that it may be possible to operate a method such that during data activity periods predetermined power control parameter (for example, a signal to interference ratio target) may be updated according to existing algorithms. That is to say, if a data block is received correctly, for example, with CRC, BER or HARQ retransmissions meeting acceptable criteria, then the signal to interference ratio target may remain unchanged. According to those known algorithms, a parameter target decrease mechanism may be triggered in cases where a certain number of consecutive data blocks are correctly received. That is to say, when the signal is clearly being received very well and targets are being exceeded, the outer loop power control mechanism is operable to decrease power control targets accordingly, thus minimising possible wasted user equipment transmit power.

In one embodiment, the method further comprises monitoring whether the default minimum power control parameter is being achieved and requesting a predetermined change to the parameter if not. Accordingly, power control may be maintained by monitoring, for example, transmissions made on non-data channels.

In one embodiment, the method comprises: determining the power control parameter value prior to detection of the period of inactivity; and, if data traffic inactivity is no longer detected, re-setting the power control parameter to the power control value determined prior to detection of the period of inactivity.

Accordingly, on detection of inactivity, a power control parameter, for example, signal to noise and interference ratio target corresponding to the latest data activity, may be stored for future use prior to the new default minimum power control parameter being set. That default minimum power control parameter may be set significantly lower than the value required for the maintenance of data traffic across a radio link such that power use at user equipment may be quickly decreased. The stored power control target may be restored as an instruction to a base station, and consequently to user equipment, immediately upon detection of data traffic activity on any or all of a selected set of existing data traffic channels.

In one embodiment, the method comprises: monitoring for data traffic inactivity on a plurality of channels of the radio link and detecting inactivity on at least one of the plurality of channels before setting the power control parameter to the default minimum value. Accordingly, it will be appreciated that data traffic may be being sent from user equipment to a base station on one or more data channels of a radio link. The method described allows a reduction of the power control parameter to a default minimum value on detection of inactivity on at least one of the plurality of data channels, thus offering potential gains to cell capacity if at least one data channel is experiencing bursty data traffic patterns.

In one embodiment, the method comprises: detecting that all of the plurality of data channels of the radio link are experiencing a period of inactivity before setting the power control parameter to the default minimum value. Accordingly, a period of inactivity may only be declared when all data channels being monitored are experiencing a period of inactivity. Setting a power control parameter to a default minimum value whilst data traffic is still occurring on one or more data channels of the radio link may not lead to overall efficient operation of a communication network. It will be appreciated that in some embodiments a selected, or predetermined, set of data traffic channels are monitored as a group for inactivity. In order to meet the "inactivity" ciriteria, each and every of the selected set of data traffic channels must be deemed to be meeting the "inactive" data traffic criteria. Termination or cancellation of the deemed inactivity period for the set may occur if any one of the data traffic channels is determined to be active. In some embodiments, all data channels on which data inactivity criteria were met must be active again before steps are taken to reinstate a stored target power control parameter. The set of data traffic channels selected for meeting "inactivity" criteria monitoring may not include all of the data traffic channels present in a radio link.

In one embodiment, monitoring the data traffic on the channel of the radio link for a period of inactivity comprises: monitoring for data blocks on at least one data channel, and declaring inactivity if no data traffic blocks are received over a predetermined time period. Accordingly, data inactivity may be determined to have occurred at user equipment when no data blocks are received on a selected set of existing data channels for a configurable time period. It will be appreciated that the configurable time period may be set such that the power control method is responsive to bursty data, thus offering a gain, but must not be too short, since it may lead to a false declaration of a data traffic inactive state.

In one embodiment, the method comprises: concurrently monitoring the data traffic on the data channel of the radio link for the period of inactivity. It will be understood that the monitoring of data traffic may occur continuously and that the periods over which data traffic on data channels are being monitored may be continuously and concurrently updated. Thus whilst data traffic on a data channel remains inactive the lowered target may be maintained, but as soon as data traffic is detected a reversion to power control methods suited to continuous data transmission may be implemented.

In one embodiment, the power control parameter is selected in order to meet a target quality of service, that quality of service being dependent upon the data traffic type. Accordingly, user equipment transmit power is selected according to the type of data being communicated on a data channel. Those data types, for example, video data, which require a high quality of service, will typically require a higher transmit power to maintain a necessary quality of service than those data traffic types which are less immediate, for example, the use of text messaging. Thus power control parameters may be selected in accordance with an appropriate data type.

In one embodiment, the power control parameter comprises a target signal to noise and interference ratio. Accordingly, a target signal to noise and interference ratio can be used to indicate a quality of service parameter dependent upon data traffic type.

In one embodiment, monitoring whether the default minimum power control parameter is being achieved comprises monitoring for receipt of transmissions made on non-data traffic carrying radio carriers of the radio link. Accordingly, transmit power control mechanisms dependent upon the monitoring of data traffic may not be used in accordance with the first aspect during data traffic inactivity periods and the monitoring of transmissions made and communications made of non-data traffic carrying radio carriers of the radio link may offer a means to control transmit power whilst user equipment is operating in a data traffic inactivity period.

In one embodiment, the default minimum value of said power control parameter ensures physical control channels of the radio link continue to function during the data traffic period of inactivity. The default minimum value may be chosen to be an optimum value for maintaining a minimum quality of service. Accordingly, it will be appreciated that the default minimum value may be predetermined and configured such that it is high enough to be able to meet quality requirements of active associated uplink physical control channels and remaining active data channels such as signalling radio bearers which are normally considered by outer loop power control during inactivity periods. A target parameter which is chosen and yet is too high limits the reduction of transmit power saved during an inactivity period and thus does not significantly contribute to gain in net cell capacity. If the target is chosen to be too low it can result in an increased number of HARQ retransmissions for initial data blocks transmitted immediately after the declaration of an inactive period which, in turn, results in RLC retransmissions, TCP slow starts and possibly TCP timeouts in extreme cases.

In one embodiment, the network node comprises user equipment. Accordingly, it will be appreciated that the transmit power control methods described herein may be of particular use in the control of user equipment uplink data carrier transmit power control. Analogous methods may be used in downlink transmission control loops in scenarios in which downlink transmit power control loops are employed.

A second aspect provides a computer program product operable, when executed on a computer, to perform the method of the first aspect.

A third aspect provides a wireless telecommunication network control node operable to control network node radio link transmit power in a wireless telecommunications network, said radio link being operable to support data traffic communication within said network on a data channel of said radio link, said wireless telecommunication network control node comprising:
monitoring logic operable to monitor the data traffic on the data channel of the radio link for a period of inactivity;
power control logic, operable to set a power control parameter, in accordance with which the network node radio link transmit power is set, to a default minimum value if inactivity is detected;
communication logic, operable to communicate the parameter to the network node.

In one embodiment, the wireless communication network comprises:
service monitoring logic operable to monitor whether the default minimum power control parameter is being achieved and requesting a predetermined change to the parameter if not.

In one embodiment, the wireless telecommunication network control node comprises a radio network controller.

In one embodiment, the wireless telecommunication network control node comprises: determining logic operable to determine the power control parameter value prior to detection of the period of inactivity; and,

if data traffic inactivity is no longer detected, power control logic operable to reset the power control parameter to the power control value determined prior to detection of the period of inactivity.

In one embodiment, the wireless telecommunication network control node comprises: monitoring logic operable to monitor for data traffic inactivity on a plurality of channels of the radio link and detect inactivity on at least one of the plurality of channels before power control logic operates to set the power control parameter to said default minimum value.

In one embodiment, the wireless telecommunication network control node comprises detection logic operable to detect that all of the plurality of data channels of the radio link are experiencing a period of inactivity before the power control logic is operable to set the power control parameter to the default minimum value.

In one embodiment, the wireless telecommunication network control node monitoring logic is operable to monitor the data traffic on the channel of the radio link for a period of inactivity by monitoring for data blocks on at least one data channel and declares inactivity if no data traffic blocks are received over a predetermined time period.

In one embodiment, the wireless telecommunication network control node monitoring logic is operable to concurrently monitor the data traffic on the data channel of said radio link for the period of inactivity.

In one embodiment, the power control parameter is selected in order to meet a target quality of service, that quality of service being dependent upon the data traffic type.

In one embodiment, the power control parameter comprises a target signal to noise and interference ratio.

In one embodiment, the service monitoring logic is operable to monitor for receipt of transmissions made on non-data traffic carrying radio carriers of the radio link.

In one embodiment, the default minimum value of the power control parameter ensures physical control channels of the radio link continue to function during the data traffic period of inactivity.

Further particular and preferred aspects are set out in the accompanying independent and dependent claims. Features of the dependent claims may be combined with the features of independent claims as appropriate, and in combinations other than those explicitly set out in the claims.

### BRIEF DESCRIPTION OF THE DRAWINGS

Embodiments will now be described further, with reference to the accompanying drawings in which:
Figure 1 illustrates the main components of a telecommunications networks according to one embodiment; and
Figure 2 is a schematic representation of a power control mechanism according to one embodiment.

### DESCRIPTION OF THE EMBODIMENTS

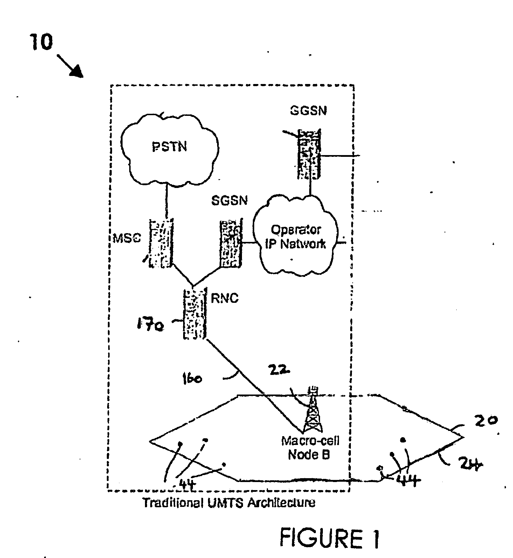

Figure 1 illustrates a wireless communication system, generally 10, according to one embodiment. User equipment 44 roam through the wireless communication system 10. Base stations 22 are provided which support respective macro cells 24. A number of such base stations are provided, which are distributed geographically in order to provide a wide area of coverage to user equipment 44. When user equipment 44 is within a macro cell 24 supported by a base station 22, communications may be established between user equipment 44 and a base station 22 over an associated radio link.

Each base station typically supports a number of sectors. Typically, a different antenna within each base station supports an associated sector. Accordingly, each base station has multiple antennas and signals sent through the different antennas are electronically weighted to provide a sectorised approach. Of course, it will be appreciated that Figure 1 illustrates a small sub-set of the total number of user equipment and base stations that may be present in a typical communications system.

The wireless communication system 10 is managed by a radio network controller 170. The radio network controller 170 controls the operation of the wireless communication system 10 by communicating with the base stations 22 over a backhaul communications link 160. The network controller 170 also communicates with the user equipment 44 via their respective radio links with base stations 22 in order to efficiently manage overall operation of wireless communication system 10.

The radio network controller 170 maintains a neighbour list which includes information about geographical relationships between cells supported by base stations. In addition, the radio network controller 170 maintains location information which provides information on the location of user equipment within the wireless communication system 10. The radio network controller 170 is operable to route traffic via circuit switch and packet switch networks. Hence, a mobile switching centre 250 is provided with which the radio network controller 170 may communicate. The mobile switching centre 250 then communicates with a circuit switch network, such as a public switched telephone network (PSTN) 210. Likewise, network controller 170 communicates with service general packet radio service support nodes (SGSNs) 220 and a gateway general packet radio support node (GGSN) 180. The GGSN then communicates with a packet switch core 190, such as, for example, the internet.

### Transmit Power Control

As described above, a radio network controller 170 controls operation of the wireless communication system 10 by communicating with a base station 22 over a backhaul communications link 160. The RNC 170 also communicates indirectly with user equipment 44 via radio links with base station 22. The base station thus cooperates with the RNC and user equipment in order to efficiently manage overall operation of the wireless communication system 10.

In general, operational characteristics of a radio carrier forming a link between user equipment 44 and base station 22 are controlled by user equipment controller logic based upon information and signals received from base station 22. A pilot channel of a radio carrier acts as a dedicated physical control channel and is necessary to maintain contact between user equipment 44 and a base station 22. The power allocated to a pilot channel of a radio carrier is typically determined by user equipment controller logic based upon information received from a base station via a radio link. The power control process between user equipment 44 and a base station 22 sets the level of overall power allocated to a pilot channel of a radio carrier and is known as "inner loop" power control. Inner loop power control operates to pre-allocate power from a user equipment power source to the radio carrier.

"Outer loop" power control for uplink operates at the RNC 170 and acts to set a target signal to noise and interference ratio. The inner loop power control tries to maintain a target signal to noise and interference ratio set by outer loop power control processes.

If user equipment 44 is close to a base station, or a radio carrier is experiencing a particularly advantageous radio transmission environment, the power allocated to a channel of a radio carrier may typically be quite low to maintain a predetermined signal to noise and interference ratio. If a low power has been allocated to a carrier, it will typically mean that a low power is required to maintain contact between that carrier and a base station. It will thus be understood that the power level pre-allocated to a channel of a radio link by an inner loop power control process is likely to be representative of an estimated power requirement associated with sending data on a data channel of that carrier.

Outer loop power control for uplink is achieved between user equipment and a base station and/or RNC by monitoring the quality of data traffic received at a base station from user equipment. In general, dependent upon the type of data carried by a channel of a radio link, an RNC or base station will operate to try to maintain a particular quality of service for an end user. A target signal to noise and interference ratio is set by the base station or RNC in accordance with a target quality of service to be maintained in respect of the particular data type being carried across the radio link. If quality of service is not being maintained, the end user will typically be subject to a disturbed service. In such a scenario, outer loop power control typically operates to increase a target signal to noise and interference ratio to be maintained by inner loop power control processes between user equipment and a base station.

### Transmission of discontinuous or bursty data

The widespread popularity of "smartphones" in commercial networks has led to a change in typical data traffic profile carried on data carriers. The loading of web pages and subsequent user reading, for example, has led to a data traffic profile which has become substantially discontinuous or "bursty" and traditional power control algorithms designed primarily for continuous data transmission may not offer a particularly efficient power control regime. This can lead to network resource overuse and the draining of user equipment power sources. In particular, in a UMTS radio network, for example, utilisation of power control algorithms designed for continuous data transmission may result in a waste of available user equipment power and cause unnecessary interference to other users when a channel carrying data is inactive and a signal to interference ratio target according to continuous data transmission regimes are set particularly high due to the latest data transmissions.

As described above, outer loop power control is operable to set a signal to interference ratio target. That power control mechanism dynamically changes the signal to interference ratio target (SIR target) for a radio link comprising data and control channels, based on short term evaluation of quality of received data traffic on data channels. That short term evaluation of quality may use measures such as cyclic redundancy check (CRC), bit error rate (BER) and/or number of HARQ retransmissions for successful reception of data, in order to maintain a predetermined average target quality of service (QoS), for example, indicated by a given predetermined block error rate (BLER) of received application data over a longer period of time.

Outer loop power control (OLPC) is efficient in determining radio resource utilisation in applications which have a more or less continuous data flow. However, such a mechanism may not be particularly efficient in situations in which the data traffic is discontinuous or bursty. This is because known OLPC mechanisms operate such that the SIR target for a radio link remains unchanged during inactive periods in the data traffic. That is to say, when no data blocks are being transmitted or received on a data channel, the signal to interference ratio target does not change from a previously determined level. During those inactivity periods on data channels, the SIR target remains unchanged at a value corresponding to the last received data block. As a result, the probability is high that associated low data rate physical control channels (which use the same SIR target for power control) will get transmitted at power levels higher than required to maintain successful communication and thus waste energy and cause higher interference to other users in the network generally, despite undergoing an inactive data traffic transmission period. It will be appreciated that such inefficiency can have particular implications to a end user experience where available power, for example, from a battery, is limited. Furthermore, overall cell capacity may also be reduced.

Outer loop power control (OLPC) operates according to a mechanism which updates a SIR target dynamically for a radio link independent upon an assessed quality of data received on data channels. The assessment is made on the basis of measures such as: cyclic redundancy check (CRC) bit error rate (BER) and a number of HARQ retransmissions for successful reception of a data block. Because no data blocks are received on data channels during inactivity periods, the SIR target for a radio link typically remains unchanged as a value corresponding to the last received data block until a data channel becomes active again if suddenly exposed to bursty or discontinuous data.

One possible solution would be to make at least one data channel active all the time by transmitting, for example, empty data blocks with cyclic redundancy check (CRC) bits whenever it is detected that there is no particular application data to be transmitted on a data channel. By implementing such an arrangement it can be ensured that a radio link comprising data and control channels is never completely inactive as long a radio link is established. However, such a solution requires transmission of CRC bits which would otherwise be unnecessary during inactivity periods. Transmission of CRC bits can lead to inefficient air interface utilisation and overall detriment to multiple user equipment operation in a busy network can be significant.

Furthermore, it will be appreciated that the SIR target requirement of a single data channel carrying empty blocks with CRC bits is typically much lower than an SIR target requirement in a scenario when transmitting full data traffic. Consequently, during the inactive period the SIR target may typically be driven to a very low value by outer loop power control mechanisms. As a result, when the inactivity period ends and data traffic is to be recommenced, there may be a particularly slow start to effectual transmissions as the outer loop power control mechanism operates to slowly increase an SIR target to that which is suitable for transmitting full rate data.

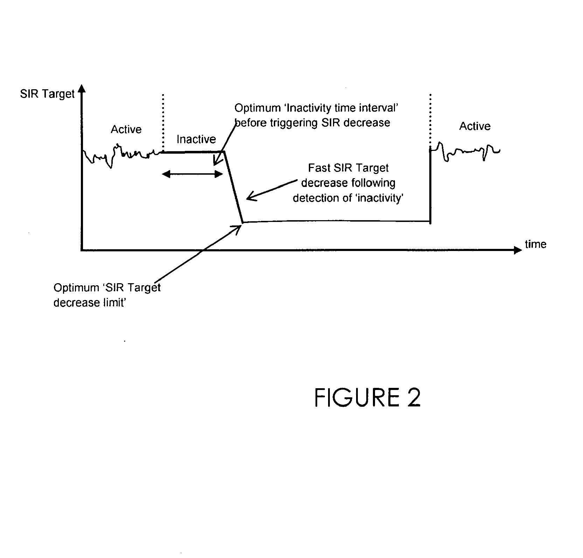

Figure 2 illustrates schematically a power control mechanism according to one embodiment. According to embodiments, outer loop power control mechanisms are adapted to be made aware of channel data inactivity as well as performing normally and monitoring existing data activity related measures like CRC, BER and HARQ retransmissions for successful reception of data during full data traffic transmissions.

During data traffic activity periods, the SIR target is updated according to known power control algorithms. That is to say, for example, if a data block is received correctly with CRC, BER or HARQ retransmissions meeting acceptable criteria, then the SIR target may remain unchanged. A fast SIR target decrease mechanism may be triggered according to some known methods, in cases where a certain number of consecutive data blocks are correctly received. That is to say, when the signal is very clearly being received well, the outer loop power control mechanism is operable to decrease the SIR target accordingly, thereby allowing user equipment power savings, and minimised possible interference.

According to embodiments, such as that shown in Figure 2, data inactivity is determined to have been detected for user equipment when no data blocks are received on a selected set of existing data channels for a configurable time period. On detection of inactivity, an SIR target value corresponding to latest data activity may be preserved for future use and a new SIR target value can be set significantly lower than the current value such that the target value decreases quickly. That predetermined configurable value is particularly low but must be sufficient to meet quality requirements of active associated physical control channels and other active data channels if any are provided on a radio link. A fast reduced SIR target may temporarily degrade quality of service for the channels not considered to be "inactive" but a short degradation to quality of service may be deemed acceptable since the SIR target can be corrected to meet quality of service requirements for such data channels using the existing power control algorithm.

A preserved SIR target is restored as an instruction immediately on detection of data traffic activity on any of the selected set of existing data channels.

A significant reduction in SIR target during detected inactivity allows significant reduction in user equipment transmit power and thus can result in reduced interference to other users. A net gain in cell capacity becomes significant as the number of users increases in the cell with minimal or practically no impact to each individual end user experience.

One embodiment of an aspect provides a power control mechanism for uplink outer loop power control for E-DCH.

During a data traffic activity period if an E-DCH transport data block is received correctly the SIR target is updated according to known power control algorithms. Data "inactivity" is detected on an uplink for and E-DCH user when no transport or data blocks are received on a select set of existing traffic radio bearer (data channels) for a configurable time period. On detection of inactivity, an RNC is operable to set the SIR target value to a decreased predetermined value. The SIR target value corresponding to the last data activity on those data channels is preserved by the RNC for future use. The new, lowered, target value is selected and configured such that it is sufficient to meet quality requirements of active associated uplink physical control channels such as HS-DPCCH and DPCCH channels, and successful communication over active data channels like a signalling radio bearer.

As described previously, by reducing an SIR target rapidly, the quality of service may be temporarily degraded for data channels such as a signalling radio bearer which are not considered when determining "inactivity". Such temporary degradation to quality of service can be deemed acceptable, since the SIR target stands to be corrected to meet quality of service requirements of those data channels based on usual mechanisms.

A preserved SIR target is restored by an RNC immediately on detection of data activity on any of the existing traffic radio bearers (also known as data channels) monitored by outer loop power control processes.

Embodiments of the power control mechanism described therein can be tuned. Tuning the algorithm in order to maximise net cell capacity gain with minimal or no impact on quality of service experienced by individual end users can be particularly beneficial. Such tuning may be achieved by considering configurable parameters impacting the performance of the solution, such as inactivity time interval and SIR target decrease limit.

An inactivity time interval will be the observation time period used by outer loop power control in order to detect "inactivity". That is to say, an inactive state can be declared after non-receipt of transport or data blocks on one or more of the selected set of radio traffic bearers or data channels for a particular predetermined configurable period. That time period must be small enough for outer loop power control to react quickly to a discontinuity in received transport data blocks, and yet must not inaccurately declare a state of inactivity when it is simply the case that the data channels are not being received correctly. Furthermore, the inactivity time interval must be large enough to avoid detrimental fluctuations in setting an SIR target, bearing in mind a typical response time of outer loop power control.

The "SIR target decrease limit" is a configurable value and it is the value to which the SIR target is fast decreased to by outer loop power control on detection of simultaneous data inactivity on a selected set of traffic radio bearers. The SIR target decrease limit is chosen to be high enough to be able to meet quality requirements of active associated uplink physical control channels such as HS-DPCCH and DPCCH and remaining active data channels such as signalling radio bearers which are not considered by outer loop power control for inactivity detection. An SIR target decrease limit which is chosen and yet is too high limits the reduction of transmit power implemented during an inactivity period and thus does not significantly contribute to a reduction in net cell capacity gain. If an SIR target decrease limit is chosen and is too small, it can result in an increased number of HARQ retransmissions for initial data blocks transmitted immediately after the declaration of an inactive period which, in turn, results in RLC retransmissions, TCP slow starts and possibly TCP timeouts in extreme cases. Such a scenario thereby negatively impacts user throughput.

Embodiments achieve air interface capacity gain by implementing a data activity aware power control mechanism. Such a mechanism is operable, according to embodiments, to offer an improvement in efficiency without impacting upon individual end user quality of service.

Reducing transmission power of individual users during detected data inactivity periods may help reduce interference for multiple users. The net cell capacity gain is thus expected to increase as the number of users in a cell increases. Optimally tuning the power control algorithm may offer a net cell capacity gain in a loaded network with multiple users, of the order of 10 - 20%.

Existing outer loop power control solutions do not take into account data inactivity and thus may be inefficient during such data inactivity periods.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its scope as defined by the claims. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A method of controlling network node radio link transmit power in a wireless telecommunications network, said radio link being operable to support communication within said network on a data channel of said radio link, comprising:
monitoring said data traffic on said channel of said radio link for a period of inactivity;
and, if inactivity is detected,
setting a power control parameter, in accordance with which said network node radio link transmit power is set, to a default minimum value;

2. A method according to claim 1, further comprising:
communicating said parameter to said network node; and
monitoring whether said default minimum power control parameter is being achieved and requesting a predetermined change to said parameter if not.

3. A method according to claim 1 or claim 2, comprising:
determining said power control parameter value prior to detection of said period of inactivity; and,
if data traffic inactivity is no longer detected,
resetting said power control parameter to said power control value determined prior to detection of said period of inactivity.

4. A method according to any preceding claim, comprising:
monitoring for data traffic inactivity on a plurality of channels of said radio link and detecting inactivity on at least one of said plurality of channels' before setting said power control parameter to said default minimum value.

5. A method according to claim 4, comprising:
detecting that all of said plurality of data channels of said radio link are experiencing a period of inactivity before setting said power control parameter to said default minimum value.

6. A method according to any preceding claim, wherein said monitoring said data traffic on said channel of said radio link for a period of inactivity comprises: monitoring for data blocks on at least one data channel, and declaring inactivity if no data traffic blocks are received over a predetermined time period.

7. A method according to any preceding claim, comprising concurrently monitoring said data traffic on said channel of said radio link for said period of inactivity.

8. A method according to any preceding claim, wherein said power control parameter is selected in order to meet a target quality of service, that quality of service being dependent upon said data traffic type.

9. A method according to claim 7, wherein said power control parameter comprises a target signal to noise and interference ratio.

10. A method according to any preceding claim, wherein said monitoring whether said default minimum power control parameter is being achieved comprises monitoring for receipt of transmissions made on non-data traffic carrying radio carriers of said radio link.

11. A method according to any preceding claim, wherein said default minimum value of said power control parameter ensures physical control channels of said radio link continue to function during said data traffic period of inactivity.

12. A method according to any preceding claim, wherein said network node comprises user equipment.

13. A computer program product operable, when executed on a computer, to perform the method of any one of claims 1 to 12.

14. A wireless telecommunication network control node operable to control network node radio link transmit power in a wireless telecommunications network, said radio link being operable to support communication within said network on a data channel of said radio link, said wireless telecommunication network control node comprising:
monitoring logic operable to monitor said data traffic on said channel of said radio link for a period of inactivity;
power control logic, operable to set a power control parameter, in accordance with which said network node radio link transmit power is set, to a default minimum value if inactivity is detected; and
communication logic, operable to communicate said parameter to said network node.

15. A wireless telecommunication network control node according to claim 14, comprising: service monitoring logic operable to monitor whether said default minimum power control parameter is being achieved and requesting a predetermined change to said parameter if not.

## Amended claims

### Amended claims in accordance with Rule 137(2) EPC.

**1.** A method of controlling network node (44) radio link transmit power in a wireless telecommunications network (10), said radio link being operable to support communication within said network (10) on a data channel of said radio link, comprising:
monitoring said data traffic on said channel of said radio link for a period of inactivity;
and, if inactivity is detected,
setting a power control parameter, in accordance with which said network node radio link transmit power is set, to a default minimum value; further comprising:
communicating said parameter to said network node (44); and
monitoring whether said default minimum power control parameter is being achieved and requesting a predetermined change to said parameter if not;
and wherein said monitoring whether said default minimum power control parameter is being achieved comprises monitoring for receipt of transmissions made on non-data traffic carrying radio carriers of said radio link.

**2.** A method according to claim 1, comprising:
determining said power control parameter value prior to detection of said period of inactivity; and,
if data traffic inactivity is no longer detected,
resetting said power control parameter to said power control value determined prior to detection of said period of inactivity.

**3.** A method according to any preceding claim, comprising:
monitoring for data traffic inactivity on a plurality of channels of said radio link and detecting inactivity on at least one of said plurality of channels before setting said power control parameter to said default minimum value.

**4.** A method according to claim 3, comprising:
detecting that all of said plurality of data channels of said radio link are experiencing a period of inactivity before setting said power control parameter to said default minimum value.

**5.** A method according to any preceding claim, wherein said monitoring said data traffic on said channel of said radio link for a period of inactivity comprises: monitoring for data blocks on at least one data channel, and declaring inactivity if no data traffic blocks are received over a predetermined time period.

**6.** A method according to any preceding claim, comprising continuously monitoring said data traffic on said channel of said radio link for said period of inactivity.

**7.** A method according to any preceding claim, wherein said power control parameter is selected in order to meet a target quality of service, that quality of service being dependent upon said data traffic type.

**8.** A method according to claim 6, wherein said power control parameter comprises a target signal to noise and interference ratio.

**9.** A method according to any preceding claim, wherein said default minimum value of said power control parameter ensures physical control channels of said radio link continue to function during said data traffic period of inactivity.

**10.** A method according to any preceding claim, wherein said network node comprises user equipment.

**11.** A computer program product operable, when executed on a computer, to perform the method of any one of claims 1 to 10.

**12.** A wireless telecommunication network control node (44) operable to control network node (44) radio link transmit power in a wireless telecommunications network (10), said radio link being operable to support communication within said network (10) on a data channel of said radio link, said wireless telecommunication network control node comprising:
monitoring logic operable to monitor said data traffic on said channel of said radio link for a period of inactivity;
power control logic, operable to set a power control parameter, in accordance with which said network node radio link transmit power is set, to a default minimum value if inactivity is detected; and
communication logic, operable to communicate said parameter to said network node;
service monitoring logic operable to monitor whether said default minimum power control parameter is being achieved and requesting a predetermined change to said parameter if not; said service monitoring logic is operable to monitor for receipt of transmissions made on non-data traffic carrying radio carriers of the radio link.
